# EUROPÄISCHE PATENTSCHRIFT

(11) **EP 0 837 783 B1**
(45) Veröffentlichungstag und Bekanntmachung des Hinweises auf die Patenterteilung: **18.08.1999**
(21) Anmeldenummer: 96919608.8
(22) Anmeldetag: 30.05.1996
(51) Int. Cl.: B60K 37/00

(54) **ANZEIGEINSTRUMENT**
INDICATOR INSTRUMENT
INSTRUMENT INDICATEUR

(30) Priorität: 25.07.1995 DE 19527090
(43) Veröffentlichungstag der Anmeldung: 29.04.1998
(73) Patentinhaber: Moto Meter GmbH, D-71229 Leonberg (DE)
(72) Erfinder: POLLMANN, Gert, D-85113 Böhmfeld (DE)
(86) Internationale Anmeldenummer: DE9600943
(87) Internationale Veröffentlichungsnummer: WO9704978

(56) Entgegenhaltungen:
- EP-A- 0 312 791
- WO-A-84/00524
- DE-A- 3 726 938
- DE-A- 3 801 485
- DE-A- 4 318 011
- GB-A- 2 019 627
- PATENT ABSTRACTS OF JAPAN vol. 10, no. 281 (M-520), 25.September 1986 & JP,A,61 102338 (MAZDA), 21.Mai 1986,

## Beschreibung

### Stand der Technik

Die Erfindung geht aus von einem Anzeigeinstrument nach dem Oberbegriff des Hauptanspruchs, wie es bereits aus der DE 38 01 485 A1 bekannt ist. Hier ist ein verstellbarer Instrumentenblock für Fahrzeuge beschrieben, der aufgrund einer Koppelung mit einem korrespondierenden Fahrzeugbauteil im Zuge einer Einstellbewegung des Fahrzeugbauteils mitverstellbar ist. Damit unterschiedliche Verstellbewegungsabläufe des Instrumentenblocks und des Fahrzeugbauteils möglich sind, sind beide getrennt voneinander gelagert und duch einen Antriebssstrang miteinander gekoppelt. Zur Spaltabdeckung sind Dichtlippen oder eine Bürstenanordnung vorgesehen, wobei die Dichtlippen zur Vermeidung eines sichtbaren Spaltes an den Kanten des Gehäuses befestigt sind und mit ihrem freien Schenkelende an der zugeordneten Schachtwand anliegen.

Aus der DE-OS 43 18 011 ist eine Anzeigeeinrichtung für Kraftfahrzeuge bekannt, bei der mehrere Anzeige- und Warnvorrichtungen in einem abgeschlossenen Gehäuse angeordnet sind, das in eine entsprechend geformte Einbauöffnung des Armaturenbrett des Kraftfahrzeugs einsetzbar ist. Der Umfang des Gehäuses ist dabei kleiner als der Innenumfang der Einbauöffnung des Armaturenbretts und der Abstand zwischen der Außenwand des Gehäuses und der Innenwand der Einbauöffnung ist an vorgegebenen Stellen des Umfangs durch wenigstens ein elastisches Element überbrückt.

Beim Einsetzen der Anzeigeeinrichtung in die Einbauöffnung wird sie durch die Elastizität des elastischen Elements in ihrer Position festgehalten.

### Vorteile der Erfindung

Das erfindungsgemäße Anzeigeinstrument mit den kennzeichnenden Merkmalen des Hauptanspruchs hat demgegenüber den Vorteil, daß das Anzeigeinstrument in seiner Position variabel ist, so daß die Position insbesondere an die Wünsche beispielsweise eines Fahrzeuglenkers anpaßbar ist, wobei der wenigstens eine Ausgleichskörper stets den Spalt zwischen dem Gehäuse und dem Gehäuserahmen überbrückt, so daß keine Schmutzpartikel, Feuchtigkeitspartikel oder sonstige Fremdkörper durch den Spalt eindringen und eventuell eine Beschädigung des Anzeigeinstruments verursachen können. Außerdem erleichtert der den Spalt überbrückende Ausgleichskörper die Reinigung des Gehäuserahmens und des Gehäuses, da auch hier der Ausgleichskörper eine Schutzfunktion vor der Reinigungsflüssigkeit übernimmt. Schließlich entsteht auch noch eine erhöhte Sicherheit, da ein versehentliches Eingreifen, z.B. mit den Fingern in den Spalt verhindert oder zumindest erschwert wird, wodurch Verletzungen vermieden werden können.

Durch die in den Unteransprüchen aufgeführten Maßnahmen sind vorteilhafte Weiterbildungen und Verbesserungen des im Hauptanspruch angegebenen Anzeigeinstruments möglich.

Ist eine Verstellvorrichtung vorgesehen, mittels der das Gehäuse innerhalb des Elastizitätsbereiches bzw. des Plastizitätsbereiches des Ausgleichskörpers bewegbar ist, so wird es einer das Anzeigeinstrument benutzenden Person erleichtert, die Verstellung des Anzeigeinstruments in eine gewünschte Position vorzunehmen.

Ein Kugelkopfgelenk oder ein Schwenkgelenk stellen besonders preiswerte und doch universelle Verstellvorrichtungen dar.

Es ist besonders vorteilhaft, wenn die Verstellvorrichtung zusätzlich für die Verstellung eines Lenkrads dient, da eine Verstellung des Lenkrads meist dann erfolgt, wenn sich die Sitzposition eines Fahrzeuglenkers ändert, so daß dann meist auch eine Verstellung der Position des Anzeigeinstruments nötig ist, welche hierdurch automatisch ausgeführt wird.

Die Schwenkbarkeit des Gehäuses innerhalb des Gehäuserahmens stellt erfahrungsgemäß die von ablesenden Personen häufigst gewünschte Variante der Verstellbarkeit eines Gehäuses dar, so daß diesem Wunsch auf vorteilhafte Weise nachgekommen werden kann.

Ist der Ausgleichskörper am Gehäuse und/oder am Gehäuserahmen befestigt, so verringert sich die Gefahr, daß der Ausgleichskörper aus seiner Position herausbewegt wird, so daß dessen Wirkung stets zuverlässig zur Verfügung steht.

Ist der Ausgleichskörper an der Vorderseite des Gehäuses und/oder des Gehäuserahmens angebracht, so dient es zum einen der Bewirkung einer subjektiv optisch angenehm empfundenen Konstruktion und zum anderen der Erleichterung der Reinigung des Anzeigeinstruments bzw. des Gehäuserahmens.

Ist der Ausgleichskörper membranartig ausgebildet, so kann mit einem hohen Maß an Materialersparnis bereits der erfindungsgemäße Zweck erreicht werden.

Schaumstoff oder Gummi eignen sich durch die ihnen naturgemäß innewohnende Elastizität besonders gut für den Ausgleichskörper. Zudem sind beide Materialien bereits handelsüblich zu akzeptablen Preisen erhältlich.

Weist der Ausgleichskörper eine Hohlkammer auf, so läßt sich die natürliche Elastizität der Luft oder eines sonstigen Fluidums ausnutzen und gleichzeitig Material für den Ausgleichskörper einsparen.

Ein weiterer Vorteil ist gegeben, wenn der Fluiddruck in der Hohlkammer zum Verstellen der Position des Gehäuses veränderbar ist, da sich auf diese Weise komplizierte elektrische oder mechanische Verstellvorrichtungen erübrigen.

### Zeichnung

Ausführungsbeispiele der Erfindung sind in der Zeichnung dargestellt und in der nachfolgenden Beschreibung näher erläutert.

Es zeigen:
Figur 1 ein gemeinsam mit einem Lenkrad schwenkbares Anzeigeinstrument in einer ersten Stellung,
Figur 2 das in Figur 1 dargestellte Anzeigeinstrument mit Lenkrad in einer zweiten Stellung,
Figur 3 ein Anzeigeinstrument mit einer Bowdenzug-Verstellvorrichtung.

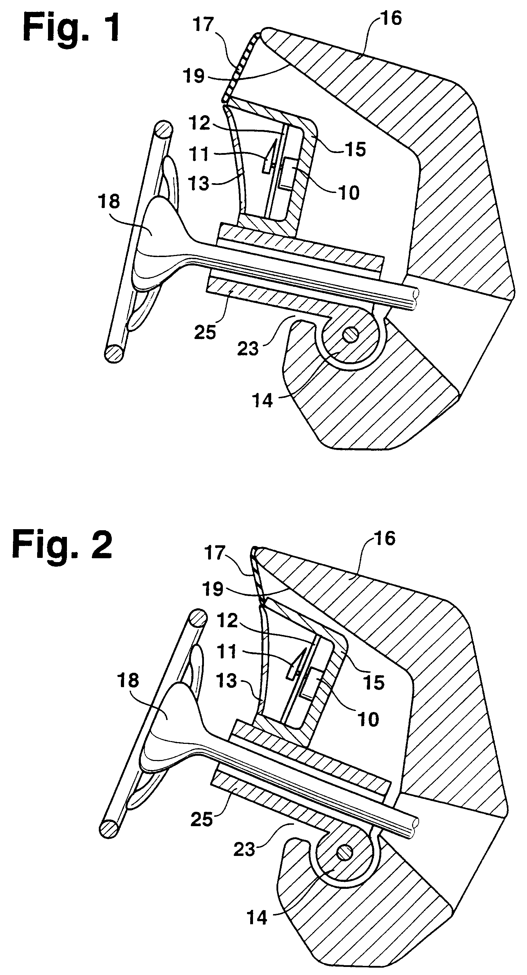

In Figur 1 ist eine aufgeschnittene Seitenansicht eines Teils eines Fahrzeuginnenraums dargestellt. Ein Lenkrad 19 ist dabei in einem Lenkradführungselement 25 gelagert. Das Lenkradführungselement 25 ist Teil einer Verstellvorrichtung 23 und weist ein Schwenkgelenk 14 auf, mit dem das Lenkradführungselement 25 schwenkbar an einem Armaturenbrett 16 befestigt ist. Weiter ist auf dem Lenkradführungselement 25 ein Gehäuse 15 angeordnet, in dessen Inneren ein Anzeigeinstrument mit einem Zifferblatt 12, einem Zeiger 11 und einem Schrittmotor 10 angeordnet ist. Das Gehäuse ist zum Lenkrad 18 hin mit einem Deckglas 13 abgedeckt. Das Gehäuse 15 ist dabei in einem Gehäuserahmen 19, der als Aussparung im Armaturenbrett 16 ausgebildet ist, angeordnet. Zwischen der vorderen Oberkante des Gehäuses 15 und der vorderen Unterkante der Oberseite des Armaturenbretts 16 verläuft ein elastischer Ausgleichskörper 17, der hier beispielsweise als elastische Gummimembran ausgebildet ist.

Bei dieser Anordnung ist das Lenkrad 18 gemeinsam mit dem Lenkradführungselement 25 und dem Gehäuse 15 vertikal schwenkbar ausgeführt. So kann eine das Lenkrad 18 beispielsweise als Fahrzeugführer nutzende Person gemeinsam mit dem Gehäuse 15 so anordnen, daß sie gleichzeitig bequem lenken kann und eine gute Sicht auf das Anzeigeinstrument im Gehäuse 15 hat. Der elastische Ausgleichskörper 17 überbrückt dabei in jeder Position, die das Gehäuse 15 gemeinsam mit dem Lenkrad 18 und dem Lenkradführungselement 25 einnehmen kann, den Spalt zwischen der vorderen Oberkante des Gehäuses 15 und der vorderen Unterkante der Oberseite des Armaturenbretts 16. Durch seine Elastizität bildet der elastische Ausgleichskörper 17 stets eine annähernd glatte Fläche. Dadurch werden die Vorteile erreicht, daß zum einen stets eine subjektiv optisch angenehm empfundene Oberfläche in Fortsetzung des Armaturenbretts 16 und des Deckglases 13 vorgesehen ist und zum anderen ein problemloses Reinigen des Armaturenbretts 16 und auch des Deckglases 13 möglich ist, ohne Gefahr zu laufen, daß Flüssigkeit in den Spalt eintritt und eventuell dorthin gelangt, wo sie Schaden anrichten kann, beispielsweise in der Schaltungselektronik. Außerdem ist durch den elastischen Ausgleichskörper 17 sichergestellt, daß keinerlei sonstige Körper, wie Schmutzpartikel, aber auch Körperteile durch versehentliches Hineingreifen, in den Spalt gelangen und dort entweder Fahrzeugteile Schaden erleiden können, oder eine Verletzungsgefahr für die hineingreifende Person besteht.

In Figur 2 ist unter Beibehaltung der Numerierung zur Veranschaulichung die Anordnung aus Figur 1 in einer sich von der Position in Figur 1 unterscheidenden Lage dargestellt. Hierbei ist das Lenkrad 18 gemeinsam mit dem Gehäuse 15 und dem Lenkradführungselement 25 nach oben geschwenkt. Deutlich ist zu erkennen, daß der elastische Ausgleichskörper 17 hier durch seine Elastizität weiterhin eine glatte Oberfläche bildet.

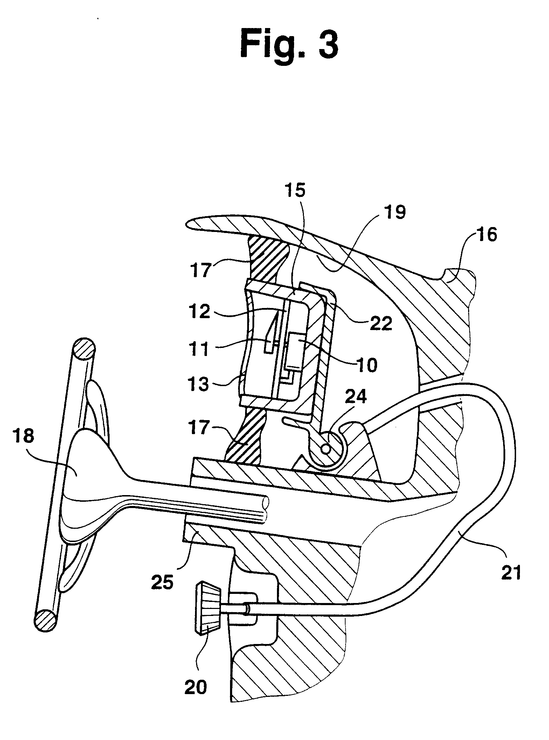

In Figur 3 ist ein weiteres Ausführungsbeispiel dargestellt. Gleiche Elemente wurden hierbei mit den gleichen Numerierungen versehen wie in den vorhergehenden Figuren 1 und 2. Das Lenkrad 18 ist wiederum in dem Lenkradführungselement 25 angeordnet, welches in diesem Beispiel nicht verstellbar ist. Oberhalb des Lenkradführungselements 25 ist wiederum als Aussparung im Armaturenbrett 16 der Gehäuserahmen 19 vorhanden, in dessen Innenraum das Anzeigeinstrument angeordnet ist. In diesem Beispiel sind jedoch zwei elastische Ausgleichskörper 17 vorgesehen, wobei der eine elastische Ausgleichskörper 17 zwischen der vorderen Unterkante der Oberseite des Armaturenbrett 16 und der vorderen Oberkante des Gehäuses 15 angeordnet ist und der zweite elastische Ausgleichskörper 17 zwischen dem Lenkradführungselement 25 und der vorderen Unterkante des Gehäuses angeordnet ist. Das Gehäuse 15 ist in eine Gehäusehalterung 22 eingesetzt, welche das Gehäuse 15 so formschlüssig umgreift, daß es sicher in der Gehäusehalterung 22 festgehalten wird. Die Gehäusehalterung 22 selbst weist an ihrer Unterseite ein Kugelkopfgelenk 24 auf, welches sich gleichfalls am Lenkradführungselement 25 abstützt. Unterhalt des Lenkrades 18 ist ein Verstellknopf 20 vorgesehen, der auf einen Bowdenzug 21 einwirkt, mit dem die Verstellkraft des Verstellknopfes 20 auf das Kugelkopfgelenk 24 übertragen wird. Das Kugelkopfgelenk 24 bildet zusammen mit dem Bowdenzug 21 und dem Verstellknopf 20 die Verstellvorrichtung 23.

Bei dieser Anordnung ist das Gehäuse 15 mit dem darin angeordneten Anzeigeinstrument unabhängig vom Lenkrad 18 verstellbar. Zur Verstellung ist die Betätigung des Verstellknopfes 20 über den Bowdenzug 21 direkt auf das Kugelkopfgelenk 24 geführt. Es ist dabei vorgesehen, die Verstellvorrichtung 23 so zu konstruieren, daß nicht nur ein vertikales Schwenken des Gehäuses 15, sondern auch ein horizontales Schwenken möglich ist. Prinzipiell ist es vorgesehen, eine Verstellbarkeit der Lage des Gehäuses 15 um jede der drei Raumachsen zu ermöglichen. Auch hier übernimmt der elastische Ausgleichskörper 17 sowohl oberhalb als auch unterhalb des Gehäuses 15 die Funktion, die Spalte zwischen dem Gehäuse 15 und dem Gehäuserahmen 19 in jeder Position zu überbrücken. Als Material für den elastischen Ausgleichskörper 17 wurde hier beispielsweise Schaumgummi eingesetzt. Es ist jedoch ebensogut jedes andere elastische Material geeignet. Die in den Figuren dargestellten Ausführungsbeispiele sind in ihren Einzelheiten miteinander kombinierbar. So kann auch beim Ausführungsbeispiel gemäß Figur 3 eine Verstellmöglichkeit für das Lenkrad 18 vorgesehen sein, die sowohl mechanisch von der Verstellvorrichtung für das Gehäuse 15 entkoppelt sein kann, aber auch eine gewisse gemeinsame Beweglichkeit aufweisen kann. Zur Verstellung des Gehäuses 15 sind sowohl mechanische als auch elektrische Antriebsmittel möglich. Zudem kann ein Speichermittel vorgesehen sein, in dem die Daten für eine bestimmte Gehäuseposition des Gehäuses 15 für einen Benutzer spezifisch abgespeichert sind und die es dem Benutzer ermöglichen, durch Eingabe beispielsweise eines persönlichen Codes zu seiner Identifikation automatisch die gewünschte, abgespeicherte Gehäuseposition einzustellen.

Als Anzeigeinstrument können beliebige Ausgestaltungen eingesetzt werden, wie beispielsweise, DQM, LCD, ELD etc. Als Material für den Ausgleichskörper 17 ist ebenso ein plastisches Material, z. B. eine viskose Kunststoffmasse, einsetzbar, das das Gehäuse 15 in der jeweiligen eingestellten Position festhält. Dadurch kann eine zusätzliche Halterung eingespart werden. Schließlich ist es auch vorgesehen, den Ausgleichskörper 17 mit einem oder mehreren Hohlräumen auszugestalten, wodurch Material eingespart werden kann. Wird dann noch eine pneumatische oder hydraulische Vorrichtung an den Hohlraum angeschlossen, so läßt sich der Innendruck im Hohlraum zum einen zur Einstellung der Elastizität des Ausgleichskörpers 17 zum anderen aber auch als Verstellvorrichtung 23 nutzen.

## Patentansprüche

1. Anzeigeinstrument, insbesondere für ein Kraftfahrzeug, mit einem Gehäuse für wenigstens eine Anzeige, das in einen Gehäuserahmen eingesetzt ist, dessen Innenumfang zur Aufnahme des Gehäuses des Anzeigeinstruments größer ist als der Außenumfang des Gehäuses des Anzeigeinstruments, und mit wenigstens einem elastichen Ausgleichskörper (17), der am Gehäuse befestigt ist, wobei die Position des Gehäuses (15) im Gehäuserahmen (19) mittels einer Verstellvorrichtung (23) verstellbar ist, und daß mittels des wenigstens einen Ausgleichskörpers (17) in jeder durch Verstellen erreichbaren Position des Gehäuses (15) wenigstens ein Spalt zwischen dem Gehäuse (15) und dem Gehäuserahmen (19) überbrückbar ist, dadurch gekennzeichnet, daß der elastische Ausgleichskörper (17) membranartig ist, daß der Ausgleichskörper (17) am Gehäuserahmen (19) befestigt ist und daß der Elastizitätsbereich des membranartigen Ausgleichskörpers (17) eine Verstellung des Gehäuse mittels der Verstellvorrichtung in jede einnehmbare Position erlaubt.

2. Anzeigeinstrument nach Anspruch 1, dadurch gekennzeichnet, daß die Verstellvorrichtung (23) ein Kugelkopfgelenk (24) oder ein Schwenkgelenk (14) umfaßt.

3. Anzeigeinstrument nach Anspruch 1 oder 2, dadurch gekennzeichnet, daß die Verstellvorrichtung (23) zusätzlich für die Verstellung eines Lenkrads (18) dient.

4. Anzeigeinstrument nach einem der Ansprüche 1 bis 3, dadurch gekennzeichnet, daß das Gehäuse (15) innerhalb des Gehäuserahmens (19) schwenkbar ist.

5. Anzeigeinstrument nach einem der Ansprüche 1 bis 4, dadurch gekennzeichnet, daß der Ausgleichskörper (17) an der Vorderseite des Gehäuses (15) und des Gehäuserahmens (19) angebracht ist.

6. Anzeigeinstrument nach einem der Ansprüche 1 bis 5, dadurch gekennzeichnet, daß der Ausgleichskörper (17) aus Schaumstoff oder Gummi besteht.

7. Anzeigeinstrument nach einem der Ansprüche 1 bis 6, dadurch gekennzeichnet, daß der Ausgleichskörper (17) eine Hohlkammer aufweist.

8. Anzeigeinstrument nach Anspruch 7, dadurch gekennzeichnet, daß durch eine Veränderung des Innendruckes in der Hohlkammer die Elastizität des Ausgleichskörpers (17) zum Verstellen der Position des Gehäuses (15) einstellbar ist.

## Claims

1. Indicating instrument, in particular for a motor vehicle, having a housing for at least one display, which is inserted into a housing frame whose inner circumference for holding the housing of the indicating instrument is larger than the outer circumference of the housing of the indicating instrument, and having at least one elastic compensating body (17) which is fastened on the housing, the position of the housing (15) in the housing frame (19) being adjustable by means of an adjusting device (23), and it being possible for at least one gap between the housing (15) and the housing frame (19) to be bridged by means of the at least one compensating body (17) in each position of the housing (15) which can be reached by adjustment, characterized in that the elastic compensating body (17) is like a diaphragm, in that the compensating body (17) is fastened on the housing frame (19), and in that the elasticity range of the diaphragm-like compensating body (17) permits the adjusting device to be used to adjust the housing into every position which can be assumed.

2. Indicating instrument according to Claim 1, characterized in that the adjusting device (23) comprises a ball-headed joint (24) or a swivel hinge (14).

3. Indicating instrument according to Claim 1 or 2, characterized in that the adjusting device (23) additionally serves to adjust a steering wheel (18).

4. Indicating instrument according to one of Claims 1 to 3, characterized in that the housing (15) can be swivelled inside the housing frame (19).

5. Indicating instrument according to one of Claims 1 to 4, characterized in that the compensating body (17) is fitted on the front side of the housing (15) and of the housing frame (19).

6. Indicating instrument according to one of Claims 1 to 5, characterized in that the compensating body (17) consists of foam plastic or rubber.

7. Indicating instrument according to one of Claims 1 to 6, characterized in that the compensating body (17) has a hollow chamber.

8. Indicating instrument according to Claim 7, characterized in that it is possible by changing the internal pressure in the hollow chamber for the elasticity of the compensating body (17) to be set in order to adjust the position of the housing (15).

## Revendications

1. Instrument indicateur, en particulier pour un véhicule à moteur, avec un boîtier pour au moins une indication, boîtier qui est inséré dans un cadre de boîtier, dont le pourtour intérieur servant à recevoir le boîtier de l'instrument indicateur est plus grand que le pourtour extérieur du boîtier de l'instrument indicateur et avec au moins un corps élastique de compensation (17) qui est fixé sur le boîtier, la position du boîtier (15) pouvant être réglée dans le cadre du boîtier (19) au moyen d'un dispositif de réglage (23), et qui peut être mis en pont au moyen d'au moins un corps de compensation (17) dans n'importe quelle position du boîtier (15) pouvant être obtenue par le réglage sur au moins une fente entre le boîtier (15) et le cadre du boîtier (19),
caractérisé en ce que
• le corps élastique de compensation (17) a le type d'une membrane,
• le corps de compensation (17) est fixé sur le cadre du boîtier (19) et
• la zone d'élasticité du corps de compensation (17) ayant le type d'une membrane permet un réglage du boîtier au moyen du dispositif de réglage dans chacune des positions qu'il peut prendre.

2. Instrument indicateur selon la revendication 1,
caractérisé en ce que
le dispositif de réglage (23) comprend une articulation sphérique (24) ou une articulation à pivot (14).

3. Instrument indicateur selon l'une des revendications 1 ou 2,
caractérisé en ce que
le dispositif de réglage (23) sert en outre au réglage d'un volant de direction (18).

4. Instrument indicateur selon l'une des revendications 1 à 3,
caractérisé en ce que
le boîtier (15) peut pivoter à l'intérieur du cadre du boîtier (19).

5. Instrument indicateur selon l'une des revendications 1 à 4,
caractérisé en ce que
le corps de compensation (17) est mis sur le côté antérieur du boîtier (15) et du cadre du boîtier (19).

6. Instrument indicateur selon l'une des revendications 1 à 5,
caractérisé en ce que
le corps de compensation (17) est réalisé en mousse ou en caoutchouc.

7. Instrument indicateur selon l'une des revendications 1 à 6,
caractérisé en ce que
le corps de compensation (17) présente une cavité.

8. Instrument indicateur selon la revendication 7,
caractérisé en ce qu'
on peut régler, par une modification de la pression interne dans la cavité, l'élasticité du corps de compensation (17) pour régler la position du boîtier (15).
